# EUROPEAN PATENT SPECIFICATION

(11) **EP 0 487 204 B1**
(45) Date of publication and mention of the grant of the patent: **02.01.1997**
(21) Application number: 91309567.5
(22) Date of filing: 17.10.1991
(51) Int. Cl.: H02M 7/06, H02M 3/08, H02M 5/20

(54) **Variable voltage regulator**
Variabler Spannungsregler
Régulateur de tension variable

(30) Priority: 23.11.1990 US 617155
(43) Date of publication of application: 27.05.1992
(73) Proprietor: Yang, Tai-Her, Taipei (TW)
(72) Inventor: Yang, Tai-Her, Taipei (TW)
(74) Representative: Arthur, Bryan Edward

(56) References cited:
- DE-A- 1 095 321
- DE-A- 1 934 223
- US-A- 3 430 127
- US-A- 3 935 505
- US-A- 4 672 269

## Description

### Field of the Invention

The present invention relates to a variable voltage regulator capable of incrementally regulating an input signal, and more particularly to a universal diode configuration which allows incremental reduction or clamping of an input signal.

### Description of the Background

Conventionally, single diodes are used in DC-to-DC, AC-to-DC and AC-to-AC regulators to provide a fixed voltage reduction. Additionally, zener diodes may be used to clamp an AC output at it fixed level. However, such diodes typically have a fixed rating and are only usable in a narrow range of circuit applications.

German Patent Publication No. 1095321 in the name of Siemens and Halske discloses a voltage linking circuit including first and second input terminals, the first input terminal connected to a load, and a first and a second output terminal connected to the first and second input terminals respectively. A diode bridge is connected between the first input and output terminals and the second input and output terminals. A zener diode is connected across the bridge.

GB404094 in the name of Gorges Villebonnet discloses a method of regulating the voltage from a source of continuous electric current by using a series of dry contact cells across which a voltage drop occurs. Tap leads are disposed between the individual cells so that the circuit may be switched between taps. Rectifiers are described as an example of such dry contact cells.

US3430127 in the name of Weiss discloses a voltage regulator and switching system in which voltage is regulated by a series of zener diodes across which a voltage drop occurs. Various of the zener diodes may be switched into and out of the circuit in order that voltage is regulated. A sequential arrangement of relays are used to switch the zener diodes into and out of the circuit.

US3935505 in the name of Spiteri discloses a dimmer for fluorescent lights whereby a pair of opposing diodes are switched into a circuit in order to reduce the amount of energy passing through the fluorescent lamp by squaring an AC sign wave. The square wave applied to the load has a lower RMS voltage than the normal mains AC wave, thereby dimming the fluorescent lights without flickering.

### SUMMARY OF THE INVENTION

It is, therefore, an object of the present invention to provide a voltage regulator having a universal diode arrangement which allows for incremental adjustment of the regulation provided thereby.

It is another object of the invention to provide a voltage regulator as described above which has an application in many well-known circuits and which can be efficiently mass-produced.

It is still another object of the present invention to provide the above-described voltage regulator in integrated circuit or in discrete component form.

According to the present invention, the above-described and other objects are accomplished by providing an improved variable voltage regulator for applying a regulated voltage across an impedance or load. The regulator comprises a first terminal (10) and a second terminal (20) for receiving an input signal;
a third terminal (100) and a fourth terminal (110) for outputting a regulated signal;
a regulating circuit (120) having a fifth terminal (X) connected to said first terminal (10) and said third terminal (100), a sixth terminal (Y) connected to said second terminal (20), a seventh terminal (M) and an eighth terminal (N,O,P,Q) said regulating circuit (120) further comprising,
a diode bridge including a first diode connected between said fifth terminal (X) and said seventh terminal (M), a second diode connected between said fifth terminal (X) and said eighth terminal (N,O,P,Q), a third diode connected between said seventh terminal (M) and said sixth terminal (Y), a fourth diode connected between said eighth terminal (N,O,P.Q) and said sixth terminal (Y), and
a diode chain including a plurality of diodes connected in series between said seventh terminal (M) and said eighth terminal (N,O,P.Q);
a plurality of tap leads, each tap lead being connected to a corresponding junction of adjacent diodes in said series-connected diode chain;
whereby said seventh terminal (M) can be selectively connected to said tap leads and said eighth terminal (N,O,P,Q), thereby short circuiting a selected number of said plurality of diodes in said diode chain so that an input signal applied to said first (10) and second (20) terminals can be incrementally regulated and output on said third (100) and fourth (110) terminals.

### BRIEF DESCRIPTION OF THE DRAWINGS

Other objects, features and advantages of the present invention will become more apparent from the following detailed description of preferred embodiments and certain modifications thereof when taken together with the accompanying drawings, in which:

Fig. 1 is a schematic diagram of an AC-to-AC voltage regulator using zener diodes to clamp an output voltage according to a first embodiment of the present invention.

Fig. 2 is a schematic diagram of an AC-to-AC voltage regulator using zener diodes to amplify an output voltage according to a second embodiment of the present invention.

Fig. 3 is a schematic diagram of a DC-to-AC voltage regulator using diodes to provide a selectable output voltage according to a third embodiment of the present invention.

Fig. 4 is a schematic diagram of a power supply having an AC-to-DC voltage regulator using diodes to provide a selectable output voltage according to a fourth embodiment of the present invention.

### DETAILED DESCRIPTION OF THE PREFERRED EMBODIMENTS

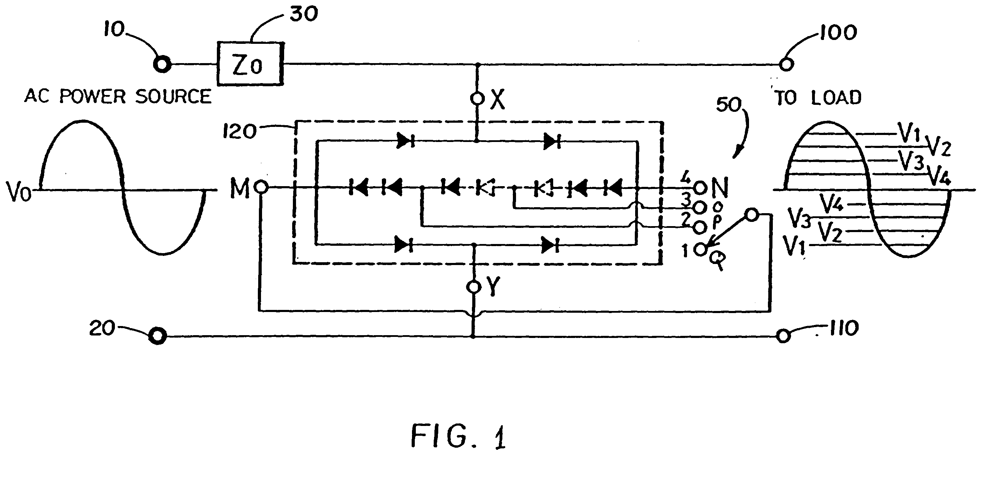

Fig. 1 illustrates an AC-to-AC voltage regulator having a first terminal 10 and a second terminal 20 for receiving an AC input signal, and a third terminal (100) and a fourth terminal (110) for outputting a regulated AC signal. The first terminal 10 is connected to the third terminal 100 through an impedance 30, and the second terminal 20 is connected directly to the fourth terminal 110. In addition, the regulator includes a regulating circuit 120 having seven connecting terminals, X, Y, M and N-Q. A fifth terminal X and a sixth terminal Y of regulating circuit 120 are connected between output terminals 100 and 110 respectively. The regulating circuit 120 includes a diode bridge connected between terminals X, Y, M and N. In addition to the diode bridge, a number of diodes are connected in series between a seventh terminal M and an eighth terminal N,O,P,Q. Tap leads extend from between the series-connected diodes. The throw terminals of a single pole multi-throw switch 50 are each connected to a corresponding one of the tap leads. The pole terminal of switch 50 is connected to the seventh terminal M. The series connected diodes may be conventional diodes or zener diodes.

In operation, an AC signal is applied at the first terminal 10 and the second terminal 20. Switch 50 may be positioned to connect any one of the tap leads to the seventh terminal M. In this manner, regulating circuit 120 can be adjusted to act as a voltage clamp, and the peak output voltage can be clamped at a preselected level depending on the number of series connected diodes which are short-circulated. Thus, the output voltage can be incrementally clamped at any level ranging from the peak level of the AC input signal to zero. The clamped voltage is output to the third terminal 100 and fourth terminal 110.

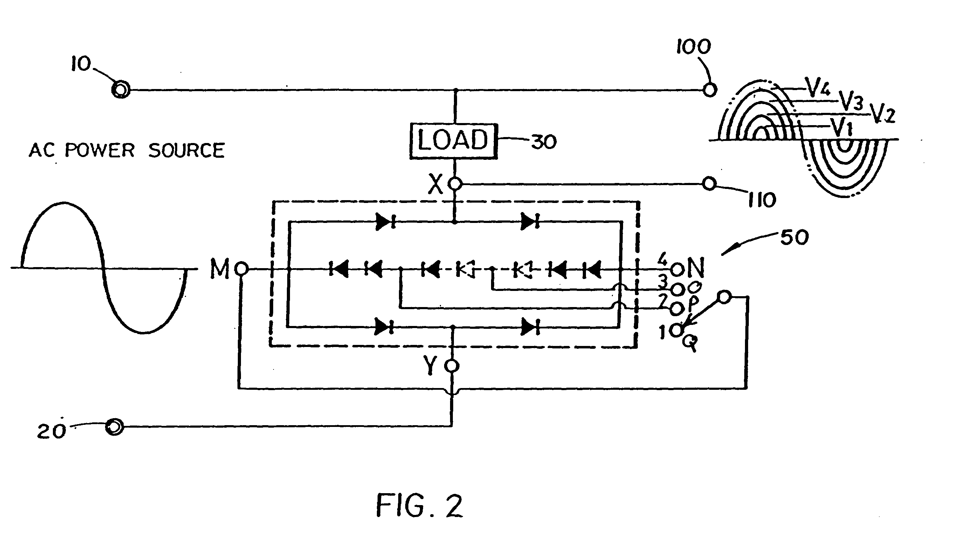

Fig. 2 illustrates another embodiment of the invention wherein a load 30 is connected between the fifth terminal X and the junction connection of the first terminal 10 and the third terminal 100. The fourth terminal 110 is connected to the fifth terminal X. In operation, the device shown in Fig. 2 acts as a voltage amplifier by which the output voltage appearing across the third and fourth terminals 100 and 110 can be incrementally reduced from the input voltage applied to the first and second terminals 10 and 20. The incremental reduction in output voltage is determined by the position of switch 50.

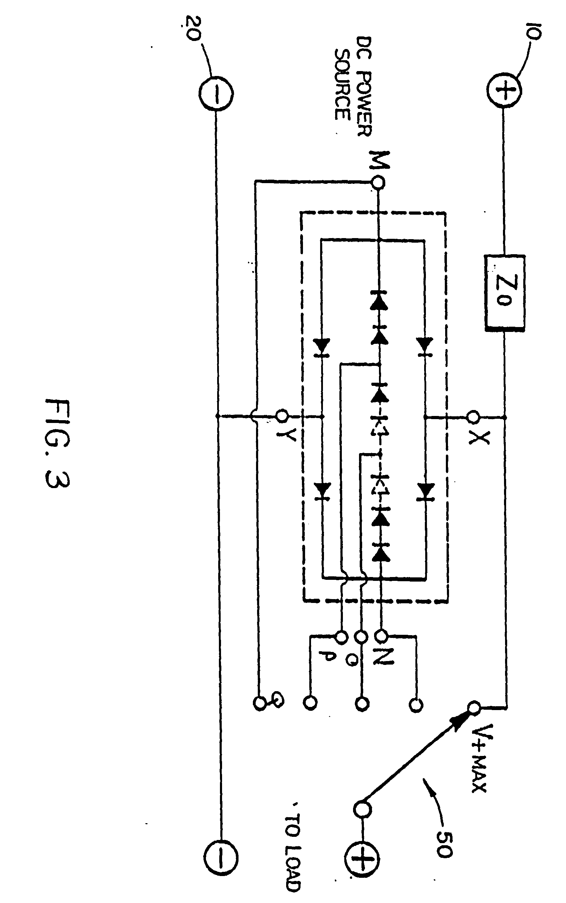

Fig. 3 illustrates a DC-to-DC voltage regulator using a diode arrangement similar to the devices shown in Figs. 1 and 2. In operation, a DC input signal is applied to the first and second terminals 10 and 20. A voltage drop appears across the series connected diodes, but the voltage drop can be incrementally reduced by by-passing selected diodes via positioning of switch 50.

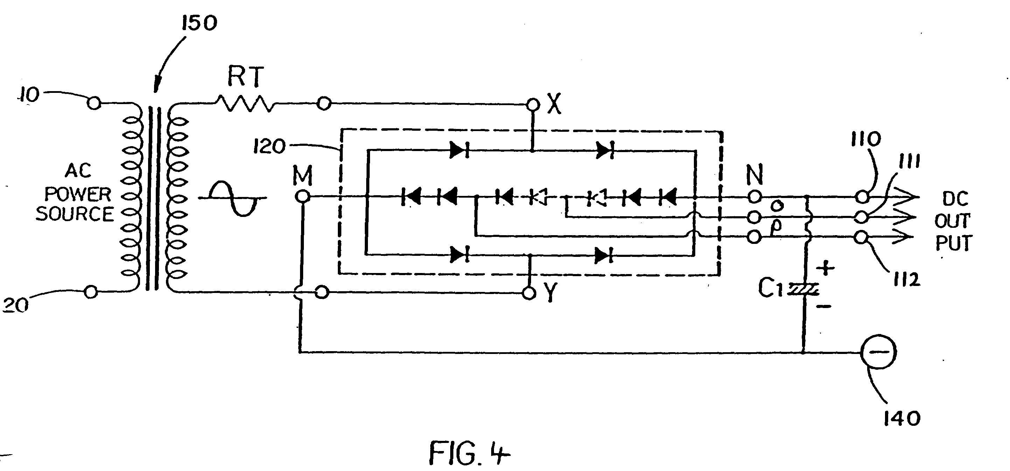

Fig. 4 depicts a power supply having a diode configuration substantially as shown in Fig. 3. Tap leads are drawn directly from between the series-connected diodes and are run to a number of eighth output terminals 110 through 112 and 7th terminal for supplying a equal number of different voltage outputs. A capacitor Cl is connected between eighth output terminals 110-112, and the seventh 140. In operation, an AC input signal is applied to the first and second terminals 10 and 20. A transformer 150 amplifies the AC input signal and supplies the amplified signal to fifth and sixth terminals X and Y of regulator circuit 120. The diode bridge of regulator circuit 120 rectifies the AC signal. Capacitor Cl smoothes the rectified signal to provide a smooth DC output. Voltage drops occur across the series-connected diodes between seventh and eighth terminals M and N. The tap leads connected between the series-connected diodes output the incremental voltage levels. This embodiment is especially useful because various regulated DC inputs are typically required by the external circuits which are attached to power supplies.

## Claims

1. A variable voltage regulator for applying a regulated voltage across an impedance or load, the regulator comprising:
a first terminal (10) and a second terminal (20) for receiving an input signal;
a third terminal (100) and a fourth terminal (110) for outputting a regulated signal;
a regulating circuit (120) having a fifth terminal (X) connected to said first terminal (10) and said third terminal (100), a sixth terminal (Y) connected to said second terminal (20), a seventh terminal (M) and an eighth terminal (N,O,P,Q) said regulating circuit (120) further comprising,
a diode bridge including a first diode connected between said fifth terminal (X) and said seventh terminal (M), a second diode connected between said fifth terminal (X) and said eighth terminal (N,O,P,Q), a third diode connected between said seventh terminal (M) and said sixth terminal (Y), a fourth diode connected between said eighth terminal (N,O,P.Q) and said sixth terminal (Y), and
a diode chain including a plurality of diodes connected in series between said seventh terminal (M) and said eighth terminal (N,O,P.Q);
a plurality of tap leads, each tap lead being connected to a corresponding junction of adjacent diodes in said series-connected diode chain;
whereby said seventh terminal (M) can be selectively connected to said tap leads and said eighth terminal (N,O,P,Q), thereby short circuiting a selected number of said plurality of diodes in said diode chain so that an input signal applied to said first (10) and second (20) terminals can be incrementally regulated and output on said third (100) and fourth (110) terminals.

2. A variable voltage regulator according to claim 1, wherein said plurality of diodes in said diode chain are zener diodes and said seventh terminal (M) can be selectively connected to said tap leads and said eighth terminal (N,O,P.Q), thereby short circuiting a selected number of said plurality of zener diodes in said diode chain to provide an incrementally adjustable voltage clamp when an input signal is applied to said first (10) and second (20) terminals.

3. A variable voltage regulator according to claim 1 or claim 2 wherein an impedance (30) is connected between said 5th terminal (X) and a junction of said first terminal (10) and third terminal.

4. A variable voltage regulator according to claim 3 wherein the fourth terminal (110) is connected to the 5th terminal (X).

5. A variable voltage regulator according to claim 1 and 2 wherein an impedance (30) is connected between said first terminal (10) and a junction between said third terminal (100) and said fifth terminal (X).

6. A variable voltage regulator according to claim 5 wherein the fourth terminal (110) is connected to the sixth terminal (Y).

7. A variable voltage regulator according to any preceding claim comprising an A.C. power supply, connected to said first (10) and second (20) terminals.

8. A variable voltage regulator according to any of claims 1 to 6, comprising a D.C. power supply connected to said first (10) and second (20) terminals, whereby said output signal is a D.C. signal.

9. A variable power supply for applying a regulated voltage across an impedance or load, the power supply comprising:
a first terminal (10) and a second terminal (20) for receiving an A.C. input signal;
a third terminal (110,111,112) and a fourth terminal (140) for outputting a regulated D.C. signal;
a transformer (150) having a primary winding connected across said first (10) and second (20) terminals, and a secondary winding having a first output and a second output;
a regulating circuit (120) having a fifth terminal (X) connected to said first output of said transformer (150), a sixth terminal (Y) connected to said second output of said transformer (150), a seventh terminal (M) and an eighth terminal (N,O,P) connected together through a capacitance, said seventh terminal (M) connected to said fourth terminal, said regulating circuit (120) further comprising,
a diode bridge including a first diode connected between said fifth terminal (X) and said seventh (M) terminal, a second diode connected between said fifth terminal (X) and said eighth terminal (N,O,P), a third diode connected between said seventh terminal (M) and said sixth terminal (Y), a fourth diode connected between said eighth terminal (N,O,P) and said sixth terminal (Y), and
a diode chain including a plurality of diodes connected in series between seventh terminal (M) and said eighth (N,O,P) terminal;
a plurality of tap leads, each tap lead being connected to a corresponding anode-cathode junction adjacent diodes in said series-connected diode chain;
whereby said third terminal (110,111,112) can be selectively connected to said tap leads and said eighth terminal (N,O,P), thereby short circuiting a selected number of said plurality of diodes in said diode chain so that an A.C. input signal applied to said first (10) and second (20) terminals is amplified and regulated to a selectable D.C. level which is output on said third and fourth (140) terminals.

10. A variable power supply according to claim 9 further comprising a single-pole multi-throw switch for selectively connecting said third terminal to said tap leads and said eighth terminal (N,O,P), thereby short circuiting a selected number of said plurality of diodes in said diode chain so that an A.C. input signal applied to said first (10) and second (20) terminals is amplified and regulated to a selectable D.C. level which is output on said third and fourth (140) terminals.

## Patentansprüche

1. Ein variabler Spannungsregler, um eine geregelte Spannung über eine Impedanz oder Last anzulegen, wobei der Regler aufweist:
einen ersten Anschluß (10) und einen zweiten Anschluß (20), um Eingangssignale zu empfangen;
einen dritten Anschluß (100) und einen vierten Anschluß (110), um ein geregeltes Signal auszugeben;
einen Regelschaltkreis (120), der einen mit dem ersten Anschluß (10) und dem dritten Anschluß (100) verbundenen fünften Anschluß (X), einen mit dem zweiten Anschluß (20) verbundenen sechsten Anschluß (Y), einen siebten Anschluß (M) und einen achten Anschluß (N, O, P, Q) aufweist, wobei der Regelschaltkreis (120) ferner aufweist,
eine Diodenbrücke, die eine erste zwischen den fünften Anschluß (X) und den siebten Anschluß (M) verbundene Diode, eine zweite zwischen den fünften Anschluß (X) und den achten Anschluß (N, O, P, Q) geschaltete Diode, eine dritte zwischen den siebten Anschluß (M) und den sechsten Anschluß (Y) geschaltete Diode, eine vierte zwischen den achten Anschluß (N, O, P, Q) und den sechsten Anschluß (Y) geschaltete Diode aufweist und
eine Diodenkette, die eine Vielzahl von in Serie zwischen den siebten Anschluß (M) und den achten Anschluß (N, O, P, Q) geschalteten Dioden einschließt;
eine Vielzahl von Anschlußleitungen, dabei ist jede Anschlußleitung mit dem entsprechenden Knotenpunkt der in der Serienschaltung der Diodenkette nachfolgenden Diode verbunden,
wobei der siebte Anschluß (M) wahlweise verbindbar ist mit den Anschlußleitungen und dem achten Anschluß (N, O, P, Q), dabei eine bestimmte Anzahl von der Vielzahl der Dioden in der Diodenkette kurzschließend, so daß ein an dem ersten (10) und dem zweiten (20) Anschluß anliegendes Eingangssignal inkrementell regelbar ist und an dem dritten (100) und vierten (110) Anschluß anliegt.

2. Ein variabler Spannungsregler nach Anspruch 1, wobei die Vielzahl von Dioden in der Diodenkette Zenerdioden sind und der siebte Anschluß (M) wahlweise verbindbar ist zu den Anschlußleitungen und dem achten Anschluß (N, O, P, Q), dabei wird eine ausgewählte Anzahl aus der Vielzahl der Zenerdioden in der Diodenkette kurzgeschlossen, um ein inkrementell einstellbare Klemmspannung zu erhalten, wenn ein Eingangssignal an dem ersten (10) und dem zweiten (20) Anschluß anliegt.

3. Ein variabler Spannungsregler nach Anspruch 1 oder 2, wobei eine Impedanz (30) zwischen den fünften Anschluß (X) und den Knotenpunkt des ersten Anschluß (10) und des dritten Anschluß geschaltet ist.

4. Ein variabler Spannungsregler nach Anspruch 3, wobei der vierte Anschluß (110) verbunden ist mit dem fünften Anschluß (X).

5. Ein variabler Spannungsregler gemäß Anspruch 1 und 2, wobei die Impedanz (30) zwischen den ersten Anschluß (10) und einen Knotenpunkt zwischen dem dritten Anschluß (100) und den fünften Anschluß (X) geschaltet ist.

6. Ein variabler Spannungsregler gemäß Anspruch 5, wobei der vierte Anschluß (110) mit dem sechsten Anschluß (Y) verbunden ist.

7. Ein variabler Spannungsregler gemäß einem der vorangehenden Ansprüche, der ein Netzanschlußgerät aufweist, das mit dem ersten (10) und dem zweiten (20) Anschluß verbunden ist.

8. Ein variabler Spannungsregler nach einem der Ansprüche 1 bis 6, der eine Gleichstromversorgung aufweist, die mit dem ersten (10) und dem zweiten (20) Anschluß verbunden ist, wobei das Ausgangssignal ein Gleichstromsignal ist.

9. Eine variable Stromversorgung um eine geregelte Spannung über eine Impedanz oder eine Last anzulegen, wobei die Stromversorgung aufweist:
einen ersten Anschluß (10) und eine zweiten Anschluß (20), um ein Wechselstromeingangssignal aufzunehmen;
einen dritten Anschluß (110, 111, 112) und einen vierten Anschluß (140) zur Ausgabe des geregelten Gleichstromsignals;
einen Transformator (150), dessen primäre Windung verbunden ist über den ersten (10) und den zweiten (20) Anschluß und dessen sekundäre Wicklung einen ersten Ausgang und einen zweiten Ausgang aufweist;
ein Regelschaltkreis (120), der einen mit dem ersten Ausgang des Transformators (150) verbundenen fünften Anschluß (X), einen mit dem zweiten Ausgang des Transformators (150) verbundenen sechsten Anschluß (Y), einen siebten Anschluß (M) und einen achten Anschluß (N, O, P) aufweist, die über eine Kapazität verbunden sind, hierbei ist der siebte Anschluß (M) mit dem vierten Anschluß verbunden, und der Regelschaltkreis (120) weist ferner auf,
eine Diodenbrücke, die eine erste zwischen den fünften Anschluß (X) und den siebten Anschluß (M) geschaltete Diode, eine zweite mit dem fünften Anschluß (X) verbundene Diode und einen achten Anschluß (N, O, P) aufweist, ferner eine dritte zwischen den siebten Anschluß (M) und den sechsten Anschluß (Y) geschaltete Diode, eine vierte zwischen den achten Anschluß (N, O, P) und den sechsten Anschluß (Y) geschaltete Diode aufweist und
eine Diodenkette, die eine Vielzahl von in Serie zwischen den siebten Anschluß (M) und den achten Anschluß (N, O, P) geschalteten Dioden einschließt;
eine Vielzahl von Anschlußleitungen, wobei jede Anschlußleitung mit der entsprechenden Anoden-Kathoden Verbindung der in der Serienschaltung nachfolgend geschalteten Diode in der Diodenkette verbunden ist;
wobei der dritte Anschluß (110, 111, 112) wahlweise verbindbar ist mit den Anschlußleitungen und dem achten Anschluß (N, O, P), dabei eine bestimmte Anzahl von der Vielzahl der Dioden in der Diodenkette kurzschließend, so daß ein an dem ersten (10) und dem zweiten (20) Anschluß angeliegendes Gleichstromsignal verstärkbar und auf einen einstellbaren Gleichstromwert regelbar ist, der an dem dritten und dem vierten Anschluß ausgegeben wird.

10. Eine variable Stromversorgung nach Anspruch 9 ferner aufweisend einen einpoligen Mehrstufenschalter, um wahlweise den dritten Anschluß mit den Anschlußleitungen und dem achten Anschluß (N, O, P) zu verbinden und somit eine bestimmte Anzahl aus der Vielzahl der Dioden in der Diodenkette kurzzuschließen, so daß ein an dem ersten (10) und dem zweiten (20) Anschluß anliegendes Wechselstromeingangssignal verstärkt und auf einen einstellbaren Gleichstromwert, der an dem dritten und vierten (140) Anschluß anliegt, einregelbar ist.

## Revendications

1. Régulateur de tension variable pour appliquer une tension régulée sur une impédance ou une charge, le régulateur comprenant :
une première borne (10) et une deuxième borne (20) pour recevoir un signal d'entrée ;
une troisième borne (100) et une quatrième borne (110) pour délivrer en sortie un signal régulé ;
un circuit de régulation (120) ayant une cinquième borne (X) connectée à ladite première borne (10) et ladite troisième borne (100), une sixième borne (Y) connectée à ladite deuxième borne (20), une septième borne (M) et une huitième borne (N,O,P,Q), ledit circuit de régulation comprenant en outre :
un pont de diodes comportant une première diode connectée entre ladite cinquième borne (X) et ladite septième borne (M), une deuxième borne connectée entre ladite cinquième borne (X) et ladite huitième borne (N, O, P, Q), une troisième borne connectée entre ladite septième borne (M) et ladite sixième borne (Y), une quatrième diode connectée entre ladite huitième borne (N,O,P,Q)et ladite sixième borne (Y), et
une chaîne de diodes comportant plusieurs diodes connectées en série entre ladite septième borne (M) et ladite huitième borne (N,O,P,Q) ;
une multiplicité de conducteurs de branchement, chaque conducteur de branchement étant connecté à une jonction correspondante de diodes adjacentes dans ladite chaîne de diodes connectées en série ;
ladite septième borne (M) pouvant être connectée de manière sélective auxdits conducteurs de branchement et à ladite huitième borne (N,O,P,Q), court-circuitant ainsi un nombre choisi de diodes parmi ladite multiplicité de diodes dans ladite chaîne de diodes de façon qu'un signal d'entrée appliqué auxdites première (10) et deuxième (20) bornes puissent être régulé de manière incrémentielle et délivré en sortie sur lesdites troisième (100) et quatrième (110) bornes.

2. Régulateur de tension variable selon la revendication 1, dans lequel ladite multiplicité de diodes dans ladite chaîne de diodes est formée de diodes Zener et ladite septième borne (M) peut être connectée de manière sélective auxdits conducteurs de branchement et à ladite huitième borne (N,O,P,Q), court-circuitant ainsi un nombre choisi de diodes de ladite multiplicité de diodes Zener dans ladite chaîne de diodes afin de fournir un blocage de tension réglable de manière incrémentielle lors de l'application d'un signal d'entrée auxdites première (10) et deuxième (20) bornes.

3. Régulateur de tension variable selon la revendication 1 ou la revendication 2, dans lequel une impédance (30) est connectée entre ladite cinquième borne (X) et une jonction desdites première borne (10) et troisième borne.

4. Régulateur de tension variable selon la revendication 3, dans lequel la quatrième borne (110) est connectée à la cinquième borne (X).

5. Régulateur de tension variable selon les revendications 1 et 2, dans lequel une impédance (30) est connectée entre ladite première borne (10) et une jonction entre ladite troisième borne (100) et ladite cinquième borne (X).

6. Régulateur de tension variable selon les revendications 5, dans lequel la quatrième borne (110) est connectée à la sixième borne (Y).

7. Régulateur de tension variable selon l'une quelconque des revendications précédentes, comprenant une alimentation en courant alternatif connectée auxdites première (10) et deuxième (20) bornes.

8. Régulateur de tension variable selon l'une quelconque des revendications 1 à 6, comprenant une alimentation en courant continu connectée auxdites première (10) et deuxième (20) bornes, ledit signal de sortie étant un signal continu.

9. Alimentation variable pour appliquer une tension régulée sur une impédance ou une charge, l'alimentation comprenant :
une première borne (10) et une deuxième borne (20) pour recevoir un signal d'entrée alternatif ;
une troisième borne (110, 111, 112) et une quatrième borne (140) pour délivrer en sortie un signal continu régulé ;
un transformateur (150) ayant un bobinage primaire connecté sur lesdites première (10) et deuxième (20) bornes et un bobinage secondaire ayant une première sortie et une seconde sortie ;
un circuit de régulation (120) ayant une cinquième borne (X) connectée à ladite première sortie dudit transformateur (150), une sixième borne (Y) connectée à ladite seconde sortie dudit transformateur (150), une septième (M) et une huitième borne (N,O,P) connectées ensemble par l'intermédiaire d'une capacité, ladite septième borne (M) étant connectée à ladite quatrième borne, ledit circuit de régulation (120) comprenant en outre,
un pont de diodes comportant une première diode connectée entre ladite cinquième borne (X) et ladite septième borne (M), une deuxième borne connectée entre ladite cinquième borne (X) et ladite huitième borne (N,O,P), une troisième borne connectée entre ladite septième borne (M) et ladite sixième borne (Y), une quatrième diode connectée entre ladite huitième borne (N,O,P) et ladite sixième borne (Y), et
une chaîne de diodes comportant une multiplicité de diodes connectées en série entre ladite septième borne (M) et ladite huitième borne (N,O,P) ;
plusieurs conducteurs de branchement, chaque conducteur de branchement étant connecté à une jonction anode-cathode correspondante de diodes adjacentes dans ladite chaîne de diodes connectées en série ;
ladite troisième borne (110, 111, 112) pouvant être connectée de manière sélective auxdits conducteurs de branchement et à ladite huitième borne (N,O,P), court-circuitant ainsi un nombre choisi de diodes parmi ladite multiplicité de diodes dans ladite chaîne de diodes de façon qu'un signal d'entrée appliqué auxdites première (10) et deuxième (20) bornes soit amplifié et régulé à un niveau de courant continu sélectionnable qui est délivré en sortie sur lesdites troisième et quatrième (140) bornes.

10. Alimentation variable selon la revendication 9, comprenant en outre un commutateur à positions multiples et à pôle unique pour connecter de manière sélective ladite troisième borne auxdits conducteurs de branchement et à ladite huitième borne (N,O,P), court-circuitant ainsi un nombre choisi de diodes parmi ladite multiplicité de diodes dans ladite chaîne de diodes de façon qu'un signal d'entrée alternatif appliqué auxdites première (10) et deuxième (20) bornes soit amplifié et régulé à un niveau de courant continu sélectionnable qui est délivré en sortie sur lesdites troisième et quatrième (140) bornes.
